# EUROPEAN PATENT APPLICATION

(11) **EP 2 293 235 A1**
(43) Date of publication of application: **09.03.2011**
(21) Application number: 08777600.1
(22) Date of filing: 25.06.2008
(51) Int. Cl.: G06Q 50/00

(54) **ROUTE SEARCHING APPARATUS AND ROUTE SEARCHING METHOD**

(71) Applicant: Navitime Japan Co., Ltd., Tokyo 107-0062 (JP)
(72) Inventor: ONISHI, Keisuke, Tokyo 107-0062 (JP); KIKUCHI, Shin, Tokyo 107-0062 (JP); MURAI, Kazuyoshi, Tokyo 107-0062 (JP); SAKAMOTO, Hiroshi, Tokyo 107-0062 (JP)
(74) Representative: HOFFMANN EITLE
(86) International application number: PCT/JP2008/061584
(87) International publication number: WO 2009/157069

(57) **Abstract**

In the present invention, at least a single route is created that satisfied route search conditions received from an information processing terminal, an amount of emissions caused by following the created route is calculated on a route-by-route basis, an emission credit purchase amount required for compensating the calculated amount of emissions is calculated, a route search result including the route, the amount of emissions, and the emission credit purchase amount is sent to the information processing terminal, emission amount compensation is performed by subtracting, from the quantity of emission credits stored in a storage unit, the amount of emissions equivalent to the emission credit purchase amount specified in an emission credit purchase order received from the information processing terminal, and a compensation result at least including the compensated amount of emissions and the corresponding emission credit purchase amount to the information processing terminal is sent for display.

## Description

### TECHNICAL FIELD

The present invention relates to a route searching apparatus and a route searching method.

### BACKGROUND ART

In recent years, with regard to the issue of global warming caused by greenhouse effect gases, implementation of a method called carbon offsetting has started as a measure for compensating the emissions of greenhouse effect gases such as carbon dioxide. The fundamental of carbon offsetting are purchasing emission credits against the amount of emissions and investing funds equivalent to the emission credits in the development of natural energy or in tree plantation and the like in an effort to offset the amount of carbon dioxide emissions.

Explained below are examples of trading systems regarding the emission credits of greenhouse effect gases.

For example. Patent Literature 1 discloses a system for trading emission credits themselves between countries.

Moreover, Patent Literature 2 discloses a system for granting carbon dioxide emission credits to expressway users in an attempt to promote ETC usage.

Patent Literature 1: Japanese Patent Application Laid-open No. 2002-149978
Patent Literature 2: Japanese Patent Application Laid-open No. 2006-209228

### DISCLOSURE OF INVENTION

### PROBLEM TO BE SOLVED BY THE INVENTION

However, while implementing the conventional technology (Patent Literature 1 and Patent Literature 2), the users seeking carbon offsets have no way of figuring out the amount of greenhouse effect gas emissions caused by travelling on a route by transport modes or figuring out the emission credits required to compensate that amount of emissions. That is, while implementing the convention technology, participation in carbon offsetting against carbon dioxide emitted by using transport modes is not possible on an individual basis.

For example, since the technology disclosed in Patent Literature 1 represents a system for trading emission credits between countries, a huge volume of transactions is involved thereby making it difficult for individual users to participate. Moreover, the technology disclosed in Patent literature 1 only enables trading of emission credits themselves, but does not allow calculating the quantity of emission credits in conjunction with a transport mode route search. Hence, the users of transport modes have no way of figuring out the necessary emission credits for carbon offsetting thereby making it difficult to participate in carbon offsetting.

The technology disclosed in Patent Literature 2 is disclosed with the aim of promoting ETC usage in order to reduce the amount of carbon dioxide emissions caused needlessly by vehicles stuck in traffic jams at tollbooths. Thus, the technology disclosed in Patent Literature 2 does not enable implementation of carbon offsetting against carbon dioxide emitted on expressways. Specifically, in the technology disclosed in Patent Literature 2, the difference in the amount of emissions on open roads and the amount of emissions on expressways is considered equivalent to emission credits. Therefore, the amount of travel on expressways cannot be subjected to carbon offsetting. Moreover, in the technology disclosed in Patent Literature 2, since the participants in carbon offsetting are confined to the expressway users, the other transport modes get excluded thereby affecting the versatility.

Since the use of any transport mode is accompanied by the emission of carbon dioxide, it is desirable that a route search navigation system not only performs a route search but also performs calculation of the amount of carbon dioxide emissions caused by following the searched route.

The present invention has been made to solve the above problems in the conventional technology and it is an object of the present invention to provide a route searching apparatus and a route searching method for enabling the users seeking carbon offsets to participate in carbon offsetting on an individual basis while using transport modes without having to perform cumbersome operations. For that, attention is focused on the factor that, in order to enable carbon offsetting for transport modes on an individual basis, instead of individuals making settlement of emission credits at each transport mode, when an individually-used navigation system including an information processing terminal and a route searching apparatus is configured to calculate the amount of greenhouse effect gas emissions caused by following a particular route and configured to make settlement of the emission credits for offsetting that amount of emissions, then it becomes possible to deal with various transportation means as well as to make use of a billing system.

### MEANS FOR SOLVING PROBLEM

In order to attain this object, a route searching apparatus and a route searching method according to one aspect of the present invention are the route searching apparatus including a control unit and a storage unit and being communicably connected to an information processing terminal including an input unit and a display unit and that is possessed by a user seeking carbon offsets and the route searching method executed by the route searching apparatus. The storage unit includes a route-search-information storage unit that stores route search information including timetable data of transport modes and road network data, an emission-amount calculation-standard storage unit that stores a calculation standard for an amount of emissions of a greenhouse effect gas over a certain distance with respect to each of the transport modes, and an emission-credit-quantity storage unit that stores a quantity of emission credits of the greenhouse effect gas on a user-by-user basis. The control unit includes a route creating unit (a route creating step) that receives a route search condition input by the user via the input unit from the information processing terminal, and creates at least a single route that satisfies the route search condition using the route search information stored in the route-search-information storage unit, an emission amount calculating unit (an emission amount calculating step) that calculates the amount of emissions on a route-by-route basis when at least the single route created by the route creating unit (at the route creating step) is followed using the calculation standard stored in the emission-amount calculation-standard storage unit, an emission-credit-purchase-amount calculating unit (an emission-credit-purchase-amount calculating step) that calculates an emission credit purchase amount required for compensating the amount of emissions calculated by the emission amount calculating step (at the emission amount calculating step), a route-search-result displaying unit (a route-search-result displaying step) that sends a route search result including at least the single route created by the route creating unit (at the route creating step), the amount of emissions calculated by the emission amount calculating unit (at the emission amount calculating step), and the emission credit purchase amount calculated by the emission-credit-purchase-amount calculating unit (at the emission-credit-purchase-amount calculating step) to the information processing terminal for display on the display unit, an emission amount compensating unit (an emission amount compensating step) that compensates the amount of emissions by receiving an emission credit purchase order for the emission credit purchase amount corresponding to the route selected by the user via the input unit based on the route search result displayed by the route-search-result displaying unit (at the route-search-result displaying step) from the information processing terminal, and subtracting the amount of emissions equivalent to the received emission credit purchase amount from the quantity of emission credits stored in the emission-credit-quantity storage unit, and a compensation result displaying unit (a compensation result displaying step) that sends a compensation result including at least the amount of emissions compensated by the emission amount compensating unit (at the emission amount compensating step) and the emission credit purchase amount corresponding to the amount of emissions to the information processing terminal for display on the display unit.

Moreover, the route searching apparatus and the route searching method according to another aspect of the present invention, the control unit further includes a billing unit (a billing step) that charges to the user the emission credit purchase amount calculated by the emission-credit-purchase-amount calculating unit (at the emission-credit-purchase-amount calculating step).

Furthermore, the route searching apparatus and the route searching method according to still another aspect of the present invention, the storage unit further includes a history information storage unit that stores history information that includes the route search result and the compensation result in at least a partially corresponding manner on a user-by-user basis. The route-search-result displaying unit (the route-search-result displaying step) stores at least a part of the route search result in the history information storage unit on a user-by-user basis. The compensation result displaying unit (the compensation result displaying step) stores at least a part of the compensation result in the history information storage unit on a user-by-user basis.

### EFFECT OF THE INVENTION

According to the present invention, the users seeking carbon offsets are enabled to participate in carbon offsetting on an individual basis while using transport modes without having to perform cumbersome operations. Specifically, according to the present invention, when a user performs a route search using the navigation system, then it is possible to figure out the amounts of greenhouse effect gas emissions along with the routes so that route selection can be done by taking into consideration carbon offsetting. Furthermore, according to the present invention, the amounts of carbon dioxide emissions corresponding to the routes obtained in response to route search orders from the users seeking carbon offsets can be compensated from the emission credits of the users. Hence, in the present invention, without having to directly participate in large-scale emission credit trading in the emission credit market, it becomes possible for the users to easily perform carbon offsetting on an individual basis against carbon dioxide emitted as a result of travelling according to routes provided by the route searching apparatus.

Moreover, according to the present invention, it is possible to charge the emission credit purchase amount to the users by making use of billing systems that are provided by existing members-only navigation systems or wireless carriers and the like. That enables the users to easily purchase the emission credits as well as to choose between advance purchase and ex-post purchase and the like as may be necessary. Hence, in the present invention, the users can make a choice regarding the purchasing of emission credits depending on the financial power or the business plans of the users.

Furthermore, according to the present invention, it is possible to store history information that includes the route search result and the compensation result in at least a partially corresponding manner on a user-by-user basis. Consequently, the amount of carbon dioxide emissions or the quantity of emission credits or the emission credit purchase amount can be easily accumulated from the history information of the users seeking carbon offsets. Hence, in the present invention, the users can easily figure out the amount of emissions for carbon offsetting or figure out the quantity or the amount of emission credits required to offset the amount of emissions.
That makes it easier to manage the emission credits.

### BRIEF DESCRIPTION OF DRAWINGS

[FIG. 1] FIG. 1 is a block diagram of an exemplary logical configuration of a route searching apparatus 100 according to the present invention.
[FIG. 2] FIG. 2 is a diagram of an example of the basic operations performed by the route searching apparatus 100 according to the present invention.
[FIG. 3] FIG. 3 is a diagram of an exemplary display screen of an information processing terminal 10 on which route search results and respective compensation results are displayed.
[FIG. 4] FIG 4 is a flowchart for explaining an example of an emission amount calculation operation.
[FIG. 5] FIG. 5 is a flowchart for explaining an example of an emission-credit-purchase-amount calculation operation.
[FIG. 6] FIG. 6 is a flowchart for explaining an example of an emission credit subtraction operation.
[FIG. 7] FIG. 7 is a flowchart for explaining an example of a billing operation.
[FIG. 8] FIG. 8 is a diagram of an example of the route searching apparatus 100 configured with a plurality of servers according to another embodiment of the present invention.

### EXPLANATIONS OF LETTERS OR NUMERALS

- 100: route searching apparatus
- 102: control unit
- 102a: route creating unit
- 102b: emission amount calculating unit
- 102c: emission-credit-purchase-amount calculating unit
- 102d: route-search-result displaying unit
- 102e: emission amount compensating unit
- 102f: compensation result displaying unit
- 102g: billing unit
- 104: communication control interface unit
- 106: storage unit
- 106a: route search information file
- 106b: emission-amount calculation-standard file
- 106c: emission credit quantity file
- 106d: billing information file
- 106e: history information file
- 10-1 to 10-3: information processing terminal
- 300: network

### BEST MODE(S) FOR CARRYING OUT THE INVENTION

Exemplary embodiments of a route searching apparatus, a route searching method and a program according to the present invention are described in detail below with reference to the accompanying drawings. The present invention is not limited to these exemplary embodiments.

### General description of present invention

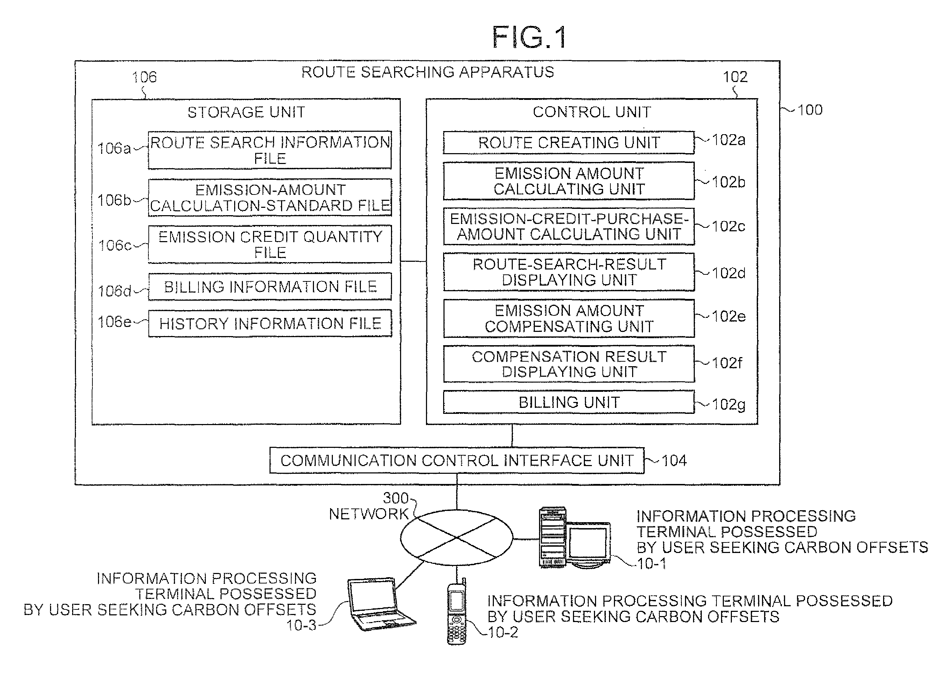

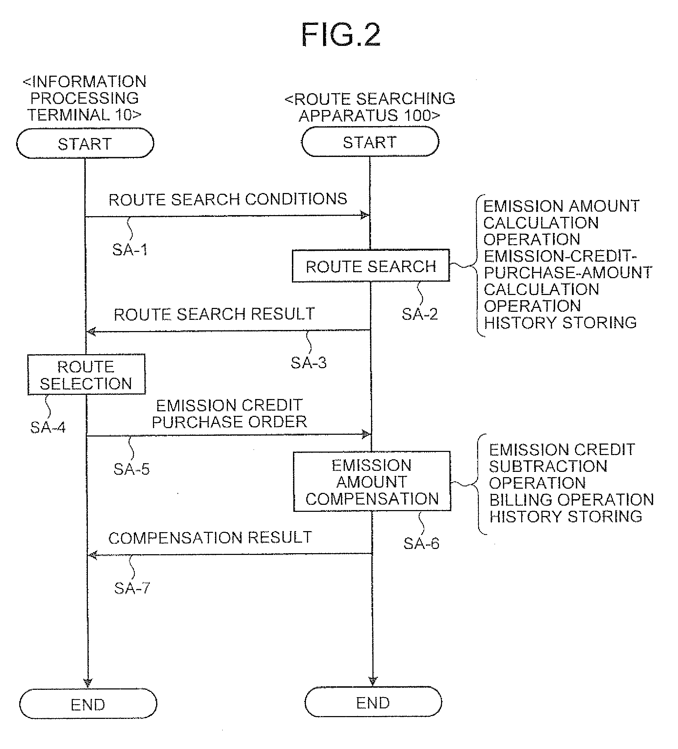

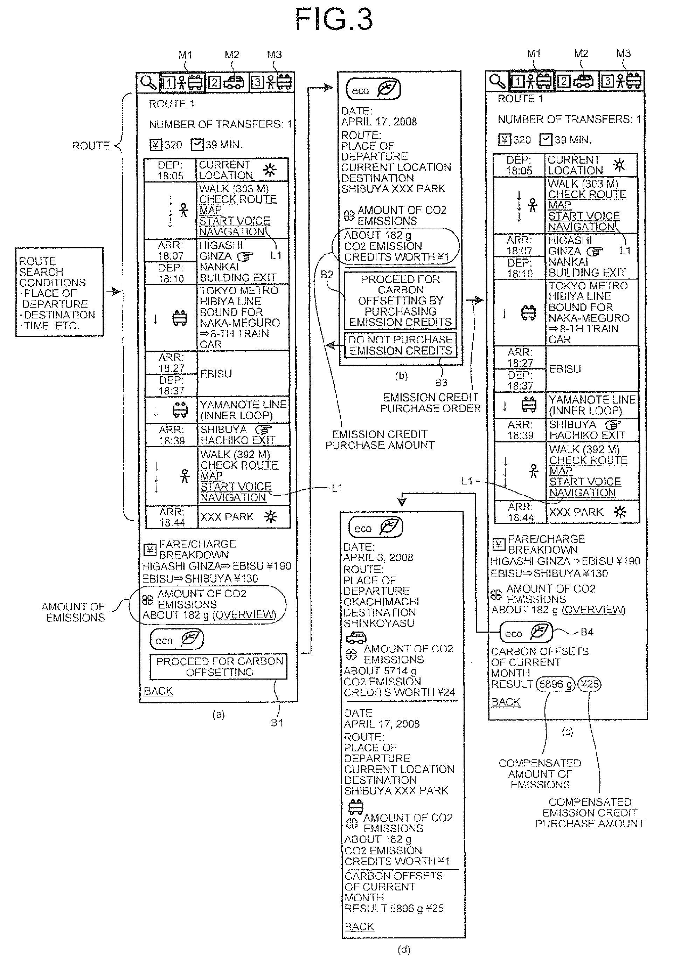

In the general description of the present invention given below, a configuration and basic operations of the route searching apparatus according to the present invention are explained with reference to FIGS. 1 to 3. Subsequently, the detailed description is given about each operation of the route searching apparatus according to the present invention. Herein, FIG. 1 is a block diagram of an exemplary logical configuration of a route searching apparatus 100 according to the present invention. In that configuration, only the portion related to the present invention is conceptually illustrated. FIG. 2 is a diagram of an example of the basic operations performed by the route searching apparatus 100 according to the present invention. FIG. 3 is a diagram of an exemplary display screen of an information processing terminal 10 on which route search results and respective compensation results are displayed.

### Configuration of route searching apparatus 100

Firstly, a configuration of the route searching apparatus 100 is described with reference to FIG. 1.

As illustrated in FIG. 1, schematically, the route searching apparatus 100 is communicably connected via a communication control interface unit 104 and through a network 300 to information processing terminals 10-1 to 10-3, each of which is possessed by a user seeking carbon offsets and which includes an input unit (not illustrated) and a display unit (not illustrated). The route searching apparatus 100 includes a storage unit 106 and a control unit 102. The constituent elements of the route searching apparatus 100 are communicably interconnected via arbitrary communication paths.

With reference to FIG. 1, each of the information processing terminals 10-1 to 10-3 has the function of accessing to the route searching apparatus 100 and performing route searches or searching surrounding information and the like. For example, each of the information processing terminals 10-1 to 10-3 is an information processing apparatus such as a desktop personal computer or a notebook personal computer or is a mobile terminal apparatus such as a cellular phone, a PHS, or a PDA. Moreover, each of the information processing terminals 10-1 to 10-3 includes a display unit (e.g., a display or a monitor made of liquid crystals or organic EL and the like) for displaying route search results or compensation results received from the route searching apparatus 100 and includes an input unit (e.g., a key input unit, a touch-sensitive panel, a keyboard, or a microphone) for inputting route search conditions or inputting selection of purchase amount orders that are to be sent to the route searching apparatus 100. Besides, each of the information processing terminals 10-1 to 10-3 can also include, for example, a location detecting unit (not illustrated) having the GPS function so that the location information indicating the current location detected by the location detecting unit can be sent to the route searching apparatus 100 thereby enabling the route searching apparatus 100 to perform navigation in real time.

With reference to FIG. 1, the communication control interface unit 104 is an interface connected to a communication devices (not illustrated) such as a router that in turn is connected to a communication line or a telephone line and the like. The communication control interface unit 104 has the function of controlling communication between the route searching apparatus 100 and the network 300. That is, the communication control interface unit 104 has the function of communicating data with the information processing terminals s 10-1 to 10-3 or with other external devices (not illustrated) such as servers via the communication line. The network 300 has the function of connecting the route searching apparatus 100 with the information processing terminals 10-1 to 10-3 or with the external devices such as servers. For example, the network 300 can be the Internet, a telephone network (including a mobile terminal network or a fixed-line telephone network), or an intranet.

With reference to FIG. 1, the storage unit 106 is a storage means such as a fixed disk drive or an external hard disk drive that is used to store various databases and tables (such as from a route search information file 106a up to a history information file 106e). For example, in the storage unit 106 is stored various programs, tables, files, databases, or Web pages and the like used in various operations.

From among the components in the storage unit 106, the route search information file 106a is a route-search-information storage unit that stores route search information including timetable data of transport modes and road network data and that is put to use by the control unit 102 at the time of creating at least a single route satisfying route search conditions (e.g., place of departure, destination, time of departure, time of arrival, and transport mode to be used) received from the information processing terminals 10-1 to 10-3. Herein, the timetable data stored in the route search information file 106a represents, for example, numerical information indicating the timetables of transport modes such as trains, airplanes, buses, streetcars, ropeways, monorails, cable cars, and ships. The road network data stored in the route search information file 106a represents, for example, latitude/longitude information or location information in various roadmaps that is put to use at the time of creating routes for travel on foot, for travel by a bicycle, for travel by an automobile, or for travel by a motorcycle and the like. The timetable data and the road network data are stored in advance in the route search information file 106a. The control unit 102 in the route searching apparatus 100 can periodically download the latest data via the network for updating the route search information stored in the route search information file 106a.

An emission-amount calculation-standard file 106b is an emission-amount calculation-standard storage unit that stores a calculation standard for the amount of greenhouse effect gas emissions over a certain distance with respect to each transport mode and that is put to use by the control unit 102 at the time of calculating on a route-by-route basis the amount of greenhouse effect gas emissions caused when at least the single route that has been created is followed. The calculation standard for the amount of greenhouse effect gas emissions as stored in the emission-amount calculation-standard file 106b represents a standard numerical value of the per-capita amount of emissions of greenhouse effect gases such as carbon dioxide calculated with respect to each transport mode depending on the travel distance.

As an example, according to the "Unyu/Koutsuu To Kankyou 2007 Ban" published by the "foundation for Promoting Personal Nobility and Ecological Transportation" and supervised by the "Ministry of Land, Infrastructure, Transport and Tourism, Policy Bureau, Environment/Ocean Division", the per-capita amount of carbon dioxide emissions of each of transport modes amounts is, for example, 173 (g/km) for private automobiles. 111 (g/km) for airplanes, 51 (g/km) for buses, and 19 (g/km) for railways. Meanwhile, it is assumed that no carbon dioxide is emitted in the case of walking. Moreover, even if differences exist as compared to the actually-used transport modes, it is assumed that when a large number of users follow various routes, the overall calculation approaches the calculation based on the abovementioned numerical values.

Furthermore, for example, regarding trains, refined classification can be carried out according to the railway lines or the types of train cars (e.g., normal train or bullet train). Depending on that classification, optimal numerical values can be used for making changes and performing calculation. Moreover, for example, since the amount of carbon dioxide emissions for each passenger can be higher in deserted railway lines, optimal numerical values for the deserted railway lines can be used making changes and performing calculation.

The calculation standard is stored in advance in the emission-amount calculation-standard file 106b. The control unit 102 in the route searching apparatus 100 can periodically download the latest data via the network for updating the calculation standard stored in the emission-amounts calculation-standard file 106b.

An emission credit quantity file 106c is an emission-credit-quantity storage unit that stores the quantity of emission credits of greenhouse effect gases on a user-by-user basis and that is put to use by the control unit 102 at the time of performing emission amount compensation by first receiving the emission credit purchase orders for the emission credit purchase amounts corresponding to the routes selected by the users via the input units of the information processing terminals 10-1 to 10-3 and then subtracting the amount of emissions equivalent to the received emission credit purchase amounts from the quantity of emission credits stored in the emission credit quantity file 106c. Herein, the quantity of emission credits stored in the emission credit quantity file 106c represents numerical information indicating the quantity of emission credits that have been or would be purchased (when the users purchase the emission credits after collecting the amount of emissions) by the users (including e.g., the end-users of the information processing terminals 10-1 to 10-3 and the navigation operators of the route searching apparatus 100). Since the emission credits have differing unit prices depending on the source or the timing thereof, the emission credit quantity file 106c can also store therein the identification codes of the emission credits, the total amount of emissions, the unit prices of the emission credits, and the like. In the present embodiment, the information regarding the identification codes and the unit prices of the emission credits is put to use by the control unit 102 at the time of calculating the emission credit purchase amount required for compensating the calculated amount of emissions.

A billing information file 106d is a billing information storage unit that stores billing information regarding the billing status and the like of the emission credit purchase amount on a user-by-user basis and that is put to use by the control unit 102 at the time of charging the calculated emission credit purchase amounts to the users seeking carbon offsets. As an example in the present embodiment, the control unit 102 sends the billing information stored in advance in the billing information file 106d regarding the emission credits that have been or would be purchased by the users (e.g., numerical information indicating the amounts equivalent to the emission credits) to, for example, a wireless carrier (e.g., a carrier providing communication service for cellular phones or a cellular phone manufacturer) and then makes settlement by ensuring substitute billing.

The history information file 106e is a history information storage unit that, when the control unit 102 stores the route search results and the compensation results and the like to be sent to the information processing terminals 10-1 to 10-3 on a user-by-user basis, is used to store history information including information regarding the users, the route search results (e.g., routes, amounts of emissions, and emission credit purchase amounts), and the compensation results (e.g., compensated amounts of emissions and the emission credit purchase amounts equivalent to the compensated amounts of emissions) in a corresponding manner. As an example, for each emission credit that is obtained in advance (including an emission credit that has been or would be purchased), it is possible to store at least the IDs of the information processing terminals 10-1 to 10-3 possessed by the users and the compensated amounts of emissions in a corresponding manner in the history information file 106e. Alternatively, for each of the abovementioned IDs, it is possible to store at least the routes and the emission credit purchase amounts in a corresponding manner in the history information file 106e.

Witch reference to FIG. 1, the control unit 102 includes an internal memory for storing control programs of the OS (operating system) and the like, storing various programs defining various sequences of operations and the like, and storing necessary data. With the use of those programs and the like, the control unit 102 performs information processing in order to execute various operations. The control unit 102 functionally and conceptually includes a route creating unit 102a, an emission amount calculating unit 102b, an emission-credit-purchase-amount calculating unit 102c, a route-search-result displaying unit 102d, an emission amount compensating unit 102e, a compensation result displaying unit 102f, and a billing unit 102g.

the route creating unit 102a is a route creating unit that receives route search conditions input by the users via the input units from the information processing terminals 10-1 to 10-3, and creates, with the use of the route search information stored in the route search information file 106a, at least a single route satisfying each set of the received route search conditions.

The emission amount calculating unit 102b is an emission amount calculating unit that calculates, with the use of the calculation standard stored in the emission-amount calculation-standard file 106b, the amount of emissions on a route-by-route basis when at least the single route created by the route creating unit 102a is followed.

The emission-credit-purchase-amount calculating unit 102c is an emission-credit-purchase-amount calculating unit that calculates, based on the identification codes and the unit prices of the emission credits and the like stored in the emission credit quantity file 106c, the emission credit purchase amount required for compensating the amount of emissions calculated by the emission amount calculating unit 102b. For example, since the emission credit purchase amount is originally determined according to the emission credit certificates issued by an emission credit provider or the like, the emission-credit-purchase-amount calculating unit 102c can check the unit prices of compensable emission credits by referring to the emission credit quantity file 106c (or referring to an external emission credit management server and the like communicably connected via the network) and then estimate the emission credit purchase amount.

Specifically, as an example, assume that the compensable unit price is "¥4200/ton". Then, for example, for the amount of emissions equal 1 to "182g", the emission-credit-purchase-amount calculating unit 102c estimates that the emission credits required for compensating that amount of emissions are worth "4200/1000000*182=0.18=0.7644(¥)". Meanwhile, the amount less than one Japanese yen is rounded out for the convenience of operations. In this way, the emission-credit-purchase-amount calculating unit 102c calculates "¥1" as the emission credit purchase amount required for carbon offsetting (compensating) the amount of emissions equivalent to "182 g". In this way, since boarding a train leads to only a small amount of emissions, carbon offsetting can be performed with the purchase amount of ¥1. Besides, since the route-search-result displaying unit 102d (described later) displays the amount of emissions as well as the emission credit purchase amount corresponding to the amount of emissions, the user can easily figure out the amount required for carbon offseting.

Subsequently, as another example, when the user travels for "Haneda to Nagasaki (one-way trip)" by airplane, assume that the emission amount calculating unit 102b calculates that the amount of emissions is "175779 g". Then, based on the abovementioned unit price, the emission-credit-purchase-amount calculating unit 102c calculates "¥739" as the emission credit purchase amount required for carbon offsetting (compensating) the amount of emissions equivalent to "175779 g". In this way, although the use of an airplane leads to an enormous amount of carbon dioxide emission, the emission credit purchase amount is affordable enough to enable participation in carbon offsetting on an individual basis.

The route-search-result displaying unit 102d is a route-search-result displaying unit that sends the route search result including at least the single route created by the route creating unit 102a, the amount of emissions calculated by the emission amount calculating unit 102b, and the emission credit purchase amount calculated by the emission-credit-purchase-amount calculating unit 102c to the information processing terminals 10-1 to 10-3 for display on the respective display units. Herein, the route-search-result displaying unit 102d can store at least a portion of the route search results on a user-by-user basis in the history information file 106e.

The emission amount compensating unit 102e is an emission amount compensating unit that performs emission amount compensation by first receiving, based on the route search result displayed by the route-search-result displaying unit 102d, the emission credit purchase orders for the emission credit purchase amounts corresponding to the routes selected by the users via the input units of the information processing terminals 10-1 to 10-3 and then subtracting the amount of emissions equivalent to the received emission credit purchase amounts from the quantity of emission credits stored in the emission credit quantity file 106c.

The compensation result displaying unit 102f is a compensation result displaying unit that sends the compensation result including the amount of emissions compensated by the emission amount compensating unit 102e and the emission credit purchase amount corresponding to that amount of emissions to the information processing terminals 10-1 to 10-3 for display on the respective display units. Herein, the compensation result displaying unit 102f can store at least a portion of the compensation results on a user-by-user basis in the history information file logs.

The billing unit 102g is a billing unit that charges the emission credit purchase amounts calculated by the emission-credit-purchase-amount calculating unit 102c to the users. As an example in the present embodiment, the billing unit 102g sends the billing information stored in advance in the billing information file 106d regarding the emission credits that have been or would be purchased by the users (e.g., numerical information indicating the amounts equivalent to the emission credits) to, for example, a wireless carrier (e.g., a carrier providing communications service for cellular phones or a cellular phone manufacturer) and then makes settlement by ensuring substitute billing.

This concludes the description regarding the configuration of the route searching apparatus 100.

### Basic operations of route searching apparatus 100

Explained, below with reference to FIG. 2 and FIG. 3 are the basic operations according to the present invention.

In the present invention, an information processing terminal 10 has an ID (including e.g., an information processing terminal identification ID such as an international mobile equipment identifier for a cellular phone, a PHS, or a PDA, or an user identification ID for the navigation system) that enables logging into the route searching apparatus 100. When a route search is necessary, the information processing terminal 10 logs into the route searching apparatus 100 and sends a route searching order with route search conditions.

Then, as illustrated in FIG. 2, the route creating unit 102a receives, from the information processing terminal 10, the route search conditions input by a user seeking carbon offsets via the input unit of the information processing terminal 10 (Step SA-1).

Herein, the route search conditions include at least the place of departure and the destination, and can also include conditions regarding such as the date, the time, the order of display (e.g., in the order of required time, in the order of fare, in the order of number of transfers, or in the order of amount of CO2 emissions), the walking speed (e.g., standard, slow, quick), and the lines to be used (e.g., airplane lines, bullet train lines, limited express lines, shuttle buses, or other toll lines).

Then, with the use of the route search information stored in the route search information file 106a, the route creating unit 102a creates at least a single route that satisfies the route search conditions received from the information processing terminal 10. Subsequently, the emission amount calculating unit 102b calculates, with the use of the calculation standard stored in the emission-amount calculation-standard file 106b, the amount of emissions on a route-by-route basis when at least the single route created as a result of the operation performed by the route creating unit 102a is followed. Then, the emission-credit-purchase-amount calculating unit 102c calculates the emission credit purchase amount required for compensating the amount of emissions calculated as a result of the operation performed by the emission amount calculating unit 102b (Step SA-2). Meanwhile, the details of each operation (the emission amount calculation operation and the emission-credit-purchase-amount calculation operation) performed at Step SA-2 are given later.

Subsequently, the route-search-result displaying unit 102d sends a route search result including at least the single route created as a result of the operation performed by at Step SA-2 the route creating unit 102a, the amount of emissions calculated as a result of the operation performed by the emission amount calculating unit 102b, and the emission credit purchase amount calculated as a result of the operation performed by the emission-credit-purchase-amount calculating unit 102c, to the information processing terminal 10 for displays on a display unit of the information processing terminal 10 (Step SA-3). Herein, the route-search-result displaying unit 102d can store at least a portion of the route search results on a user-by-user basis in the history information file 106e.

Herein, explained below with reference to (a) and (b) in FIG. 3 is an example of a route search result displayed on the display unit of the information processing terminal 10 as a result of the operation performed at the Step SA-3 by the route-search-result displaying unit 102d.

With reference to (a) and (b) in FIG. 3, the route-search-result displaying unit 102d displays the route search result that includes the routes satisfying the route search conditions input by the user, the amounts of greenhouse effect gas emissions caused by following those routes, and the emission credit purchase amount required for compensating those amounts of emissions.

As an example, on the display screen illustrated in FIG. 3(a), a "route" portion (including information regarding e.g., the number of transfers, the fare, the required time, the distance by walk, the transfer stations, the suitable train car to board, and the suitable ticket gate) and an "amount of emissions" portion (amount (g) of CO2 emissions) are displayed from among the route search result. Specifically, on the display screen illustrated in FIG. 3(a), a "route 1" is displayed as a route in the route search result. From the current location to the place of the destination, the first route (train route) is made of "walking→train→train→walking" in that order. Moreover, in FIG. 3(a), 1) A train mark M1 2) an automobile mark M2, and 3) a train mark M3 are displayed at the top end of the screen. These marks M1 to M3 indicate that the first route and the third route are "train routes" and the second route is an "automobile route". On the lower side of the display screen in FIG. 3(a), "about 182 g" of CO2 emissions is displayed as the "amount of emissions" in the route search result and a button B1 titled "proceed for carbon offsetting (purchase)" is displayed for purchasing the amount of emissions. When the user clicks the button B1, the page illustrated in FIG. 3(b) appears.

The route search date and the information regarding the route are displayed on the display screen illustrated in FIG. 3(b). Moreover, the amount of carbon dioxide emissions and the corresponding emission credit purchase amount are displayed on the lower side of the screen. That is, on the display screen illustrated in FIG. 3(b), it is displayed that the CO2 emission credit purchase amount is "¥1" as the "emission credit purchase amount" (CO2 emission credit (¥)) in the route search result. Upon checking the emission credit purchase amount by the users, when the user selects and clicks a button B2 titled "proceed for carbon offsetting by purchasing emission credits" and placed on the lower side of the screen, an "emission credit purchase order", which corresponds to the "emission credit purchase amount (¥1)" that would be required for compensating the "amount of emissions" caused by following the "route 1", is sent to the route searching apparatus 100. On the other hand, when the user selects and clicks a button B3 titled "do not purchase emission credits" and placed on the lower side of the screen, the page illustrated in FIG. 3(a) on the left side reappears.

Returning to FIG. 2, the emission amount compensating unit 102e receives, from the information processing terminal 10, an emission credit purchase order for the emission credit purchase amount corresponding to the route that has been selected (at Step A-4) by the user seeking carbon offsets via the input unit based on the route search result displayed on the display unit of the information processing terminal 10 (Step SA-5).

Then, the emission amount compensating unit 102e performs emission amount compensation by subtracting the amount of emissions equivalent to the received emission credit purchase amount from the quantity of emission credits stored in the emission credit quantity file 106c (Step SA-6). Herein, the billing unit 102g can charge the emission credit purchase amount, which is calculate as a result of the operation performed by the emission-credit-purchase-amount calculating unit 102c, to the user. Meanwhile, the details of each operation (the emission credit subtraction operation and the billing operation) performed at Step SA-6 are given later.

Herein, explained below with reference to (a) and (c) in FIG. 3 is an example of the billing operation performed at Step SA-6 by the billing unit 102g.

As an example, the billing unit 102g can perform the billing operation not only when the user clicks the button B1 titled "proceed for carbon offsetting." illustrated in FIG. 3(a) but also when the control unit 102 in the route searching apparatus 100 actually performs navigation. Specifically, as illustrated in (a) and (c) in FIG. 3, when the user clicks a link L1 titled "start voice navigation", the billing unit 102g can recognize the user of the information processing terminal 10 as the billing target and perform the billing operation. The timing for that can the navigation performed at the place of departure or the navigation performed at the destination started by clicking "start voice navigation". Alternatively, the billing can be performed when the navigation by the route searching apparatus 100 reachs near the destination and at the point of time when an output unit (not illustrated) such as a speaker outputs a closing greeting such as "You have reached your destination!".

Returning to the explanation with reference to FIG. 2, the compensation result displaying unit 102f sends the compensation result at least including the amount of emissions compensated as a result of the operation performed by the emission amount compensating unit 102e and the corresponding emission credit purchase amount to the information processing terminal 10 for display on the display unit of the information processing terminal 10 (Step SA-7). Herein, the compensation result displaying unit 102f can store at least a portion of the compensation results on a user-by-user basis in the history information file 106e.

Wherein, explained below with reference to (c) and (d) in FIG. 3 is an example of the compensation result displayed on the display unit of the information processing terminal 10 as a result of the operation performed at Step SA-7 by the compensation result displaying unit 102f.

As illustrated in (c) and (d) in FIG. 3, the compensation result displaying unit 102f displays the compensated amount of emissions and the compensated emission credit purchase amount corresponding to the compensated amount of emissions as well as displays the route and the amount of emissions.

As an example, the route search result illustrated in FIG. 3(a) is displayed on the display screen illustrated in FIG. 3(c). Moreover, the "compensated amount of emissions" and the "compensated emission credit purchase amount." are displayed on the lower side of the screen. That is, when the button B2 on the display screen illustrated in FIG. 3(b) is clicked, the compensation result displaying unit 102f follows the emission credit purchase order that has been received, and, with respect to the "route 1", hides the button B1 titled proceed for carbon offsetting" illustrated in FIG. 3(a) and displays, for example, "carbon offsets of current month" of the user. Specifically, in the "carbon offsets of current month" displayed on the display screen illustrated in FIG. 3(c), "5896 g" is displayed as the total amount of emissions compensated in the current month as a result of the operation performed by the emission amount compensating unit 102e and "¥25" is displayed as the total of the emission credit purchase amount in the current month corresponding to the compensated amount of emissions. Meanwhile, the route searching apparatus 100 stores, in the history information file 106e, the history information that includes the users, the route search results, and the compensation results stored in a corresponding manner. Specifically, for each emission credit that is obtained in advance (including an emission credit that has been or would be purchased), the route searching apparatus 100 stores, in the history information file 106e, at least the ID of the information processing terminal 10 possessed by the user and the compensated amount of emissions (compensated amount) in a corresponding manner. Hence, for example, as the "carbon offsets of current month" illustrated in FIG. 3(c), it is possible to display the compensation result by taking a tally on a monthly basis.

The display screen illustrated in FIG. 3(d) is displayed when the user clicks a button B4 titled "logo mark (eco)" representing carbon offsetting as displayed on the display screen illustrated in FIG. 3(c). As an example, the date of use, the place of departure, the destination, the transport mode type, the amount of emissions, and the emission credit amount as the detailed record for the current month are displayed on the display screen illustrated in FIG. 3(d). Specifically, the past history information regarding April 3, 2008 as a use date (e.g., for the automobile route, the amount of emissions is "about 5714 g" and the emission credit is worth "¥24") and the information regarding April 17 identical to that illustrated in FIG. 3(b) (e.g., for the train route, the amount of emissions is "about 182 g" and the emission credit is worth "¥1") are displayed on the display screen illustrated in FIG. 3(d). Moreover, the breakdown such as the total amount of emissions compensated in the current month being "5896 g" and the total emission credit purchase amount in the current month corresponding to the compensated amounts of emissions being "¥25" are also displayed. Meanwhile, the route searching apparatus 100 stores, in the history information file 106e, the history information that includes the users, the route search results, and the compensation results stored in a corresponding manner. Specifically, for each of the abovementioned IDs, the route searching apparatus 100 stores at least the routes and the emission credit purchase amounts in a corresponding manner in the history information file 106e. Hence, for example, as the details of the "carbon offsets of current month" illustrated in FIG. 3(d), it is possible to display the compensation result along with the breakdown.

This concludes the description regarding the basic operations of the route searching apparatus 100.

Moreover, this concludes the general description of the present invention.

### Operations of route searching apparatus 100

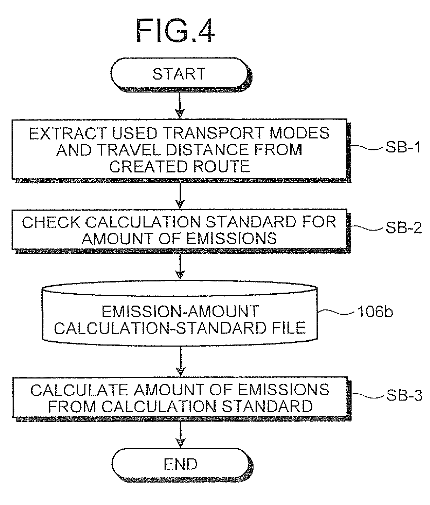

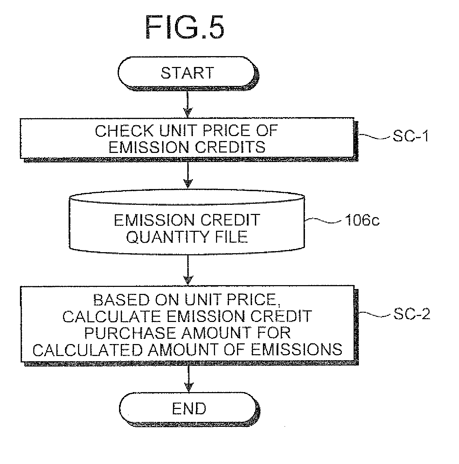

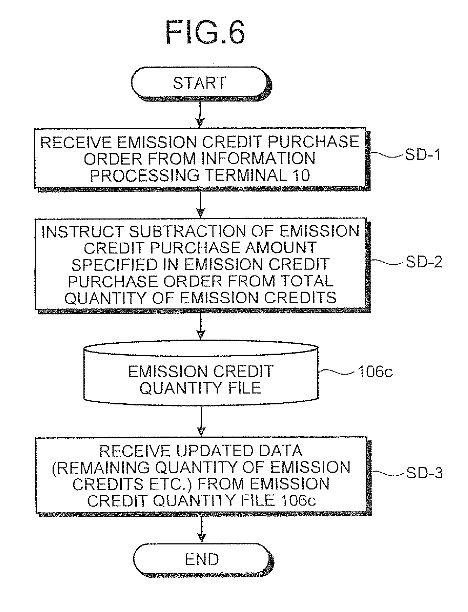

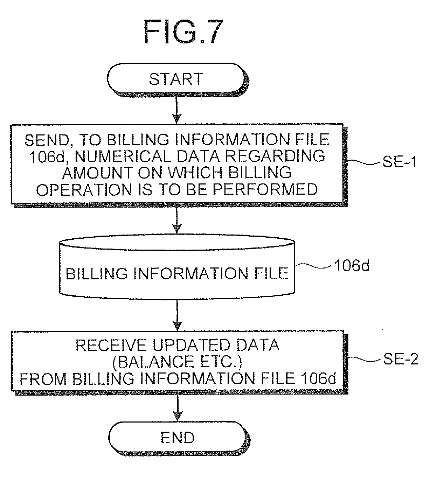

Explained below with reference to FIG. 4 to FIG. 7 are examples of the operations (from the emission amount calculation operation to the billing operation) performed by the route searching apparatus 100 configured in the abovementioned manner according to the present embodiment. FIG. 4 is a flowchart for explaining an example of the emission amount calculation operation. FIG. 5 is a flowchart for explaining an example of the emission-credit-purchase-amount calculation operation. FIG. 6 is a flowchart for explaining an example of the emission credit subtraction operation. FIG. 7 is a flowchart for explaining an example of the billing operation.

### Emission amount calculation operation

Firstly, explained below with reference to FIG. 4 is an example of the emission amount calculation operation performed at Step SA-2 illustrated in FIG. 2.

As illustrated in FIG. 4, the emission amount calculating unit 102b extracts, from the at least one route created by the route creating unit 102a, the transport modes (e.g., private automobile, airplane, bus, railway, and the like) used to follow that route and the travel distance (km) for that route (Step SB-1).

Subsequently, the emission amount calculating unit 102b refers to the emission-amount calculation-standard file 106b for checking the calculation standard for the amount of emissions that is different with respect to each extracted transport mode (e.g., 173 (g/km) for private automobiles. 111 (g/km) for airplanes, 51 (g/km) for buses, and 19 (g/km; for railways) (Step SB-2).

Then, the emission amount calculating unit 102b applies a transport mode (e.g., railway) and the travel distance (e.g., about 9.6 km) extracted at Step SB-1 to the referred calculation standard and calculates the amount of emissions (e.g., about 182 g) (Step Sub-3).

### Emission-credit-purchase-amount calculation operation

Explained below with reference to FIG. 5 is the emission-credit-purchase-amount calculation operation performed at Step SA-2 illustrated in FIG. 2.

As illustrated in FIG. 5, the emission-credit-purchase-amount calculating unit 102c refers to the emission credit quantity file 106c for checking the unit price (e.g., "¥4200/ton") of the emission credits (Step SC-1) .

Subsequently, for the amount of emissions (e.g., 182 g) calculated as a result of the operation performed by the emission amount calculating unit 102b, the emission-credit-purchase-amount calculating unit 102c calculates the emission credit purchase amount (e.g., ¥1) based on the unit price of the emission credits (Step SC-2).

### Emission credit subtraction operation

Explained below with reference to FIG. 6 is an example of the emission credit subtraction operation performed at Step SA-6 illustrated in FIG- 2.

As illustrated in FIG. 6, the emission amount compensating unit 102e receives an emission credit purchase order for the emission credit purchase amount (e.g., a purchase order for emission credits worth ¥1) which is sent from the information processing terminal 10 (Step SD-1).

Subsequently, the emission amount compensating unit 102e instructs the emission credit quantity file 106c to subtract the emission credit purchase amount (e.g., ¥1) specified in the emission credit purchase order from the total quantity of emission credits (e.g., ¥1000) stored on a user-by-user basis in the emission credit quantity file 106e (e.g., ¥1000-¥1) (Step SD-2).

Then, the emission amount compensating unit 102e receives, from the emission credit quantity file 106c, the updated data indicating the quantity of the emission credits remaining after subtraction and the like (e.g., ¥1000-¥1=¥999) (Step SD-3).

### Billing operation

Explained below with reference to FIG. 7 is an example of the billing operation performed at Step SA-6 illustrated in FIG. 2.

As illustrated in FIG. 7, the billing unit 102g sends, to the billing information file 106d, the numerical information regarding the amount (e.g., ¥1) that is calculated as a result of the operation performed by the emission-credit-purchase-amount calculating unit 102c, that is specified by the user in the emission credit purchase order, and that is subtracted from the emission credit quantity file 106c as a result of the operation performed by the emission amount compensating unit 102e (Step SE-1). That is, the billing unit 102g instructs subtraction of the amount (e.g., ¥1) equivalent to the emission credits from the billing information file 106d, which is used to store the billing information equivalent to a virtual account for substitute billing as entrusted in advance by the user. Besides, the billing unit 102g sends that billing information to, for example, a wireless carrier (e,g., a carrier providing communications service for cellular phones or a cellular phone manufacturer) and makes settlement by ensuring substitute billing.

Herein, the billing unit 102g can perform the billing operation (settlement) for each time the amount of emission is compensated as a result of the operation performed by the emission amount compensating unit 102e. Alternatively, the billing unit 102g can perform the billing operation (settlement) after taking a tally of the total emission credit purchase amount on a periodic basis (e.g., on a weekly basis or on a monthly basis). Still alternatively, the billing unit 102g can perform the billing operation (settlement) when the emission credit purchase amount runs to a predetermined amount. Still alternatively, the billing unit 102g can perform the billing operation (settlement) by the method of prepaid that includes a separate purchase procedure. Meanwhile, in the method of advance purchase, the balance can be displayed in the form of the travelable distance for each transport mode.

Subsequently, the billing unit 102g receives, from the billing information file 106d, the updated data indicating the balance such as deposit amount of the user after the billing operation (settlement) has been performed (e.g., ¥5000-¥1=¥4999) (Step SE-2).

This concludes the description regarding the operations of the route searching apparatus 100.

### [Other embodiments]

Although the invention has been described with respect to a specific embodiment, the present invention is not to be thus limited but is to be construed as embodying all modifications and alternative constructions that may occur to one skilled in the art that fairly fall within the basic teaching herein set forth.

Moreover, of the operations described in the embodiment, all or part of the operations explained as being performed automatically can be performed manually. Similarly, all or part of the processes explained as being performed manually can be performed automatically by a known method.

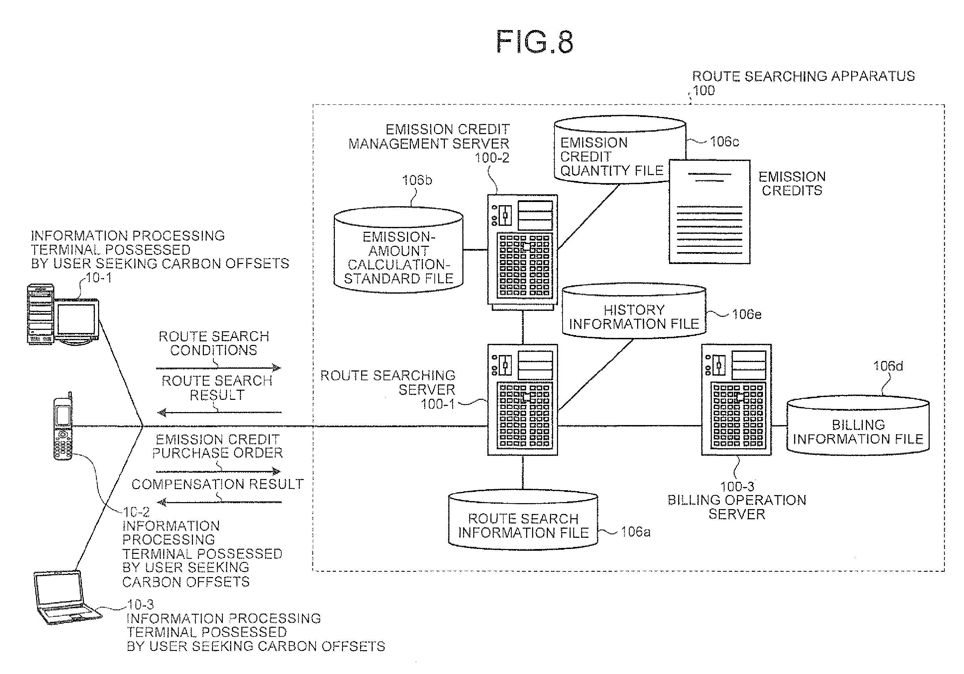

For example, in the present embodiment, the route searching apparatus 100 is configured as a single server. However, it is also possible to configure the route searching apparatus 100 with a plurality of servers functioning in tandem. FIG. 8 is a diagram of an example of the route searching apparatus 100 configured with a plurality of servers according to another embodiment of the present invention. Specifically, as illustrated in FIG. 8, a route searching server 100-1 includes the route search information file 106a and the history information file 106e, and has functions corresponding to the route creating unit 102a, the route-search-result displaying unit 102d, and the compensation result displaying unit 102f of the control unit 102 described above. An emission credit management server 100-2 includes the emission-amount calculation-standard file 106b and the emission credit quantity file 106c, and has functions corresponding to the emission amount calculating unit 102b, the emission-credit-purchase-amount calculating unit 102c, and the emission amount compensating unit 102e of the control unit 102 described above. A billing operation server 100-3 includes the billing information file 106d, and has functions corresponding to the billing unit 102g of the control unit 102 described above. Herein, the route searching server 100-1, the emission credit management server 100-2, and the billing operation server 100-3 are connected via a network and perform data association. Hence, the plurality of servers 100-1 to 100-3 can be made to operate as the route searching apparatus 100 according to the present invention.

Meanwhile, the processing procedures, the control procedures, specific names, information including registration data of each operation and parameters such as search conditions, display example, and database construction described in the embodiments or illustrated in the drawings can be changed as required unless otherwise specified.

Moreover, regarding the route searching apparatus 100, the constituent elements illustrated in the drawings are merely functional and conceptual, and need not be physically configured as illustrated.

For example, the process functions performed by the devices in the route searching apparatus 100, particularly the process functions performed by the control unit 102 are entirely or partially realized by the CPU (Central Processing Unit) or computer programs that are analyzed and executed by the CPU, or realized as hardware by wired logic. The programs are recorded in a recording medium described later and are mechanically read by the route searching apparatus 100 as necessary. That is, the storage unit 106 such as a ROM or an HD is used to record the computer programs that perform various operations by issuing instructions to the CPU in cooperation with the OS (Operating System). The computer programs are executed upon being loaded in a RAM and then configure the control unit 102 in cooperation with the CPU.

Alternatively, the computer programs can be stored in an arbitrary application program server connected to the route searching apparatus 100 via the network 300 and can be downloaded entirely or partially as necessary.

Still alternatively, the programs according to the present invention can also be stored in a computer-readable recording medium. Herein, the "recording medium" can be a "portable physical medium" such as a flexible disk, a magneto optical disk, a ROM, an EPROM, an EEPROM, a CD-ROM, an MO, or a DVD, or can be a "communication medium" such as a communication line or a carrier wave that holds the programs for a short period of time at the time of transmission via a network such as a LAN, a WAM, or the Internet.

Meanwhile, a "program" represents a data processing method described in an arbitrary language or a description method, and the format such as the source code or the binary code is no object. Moreover, a "program" does not necessarily represent a singularly-configured program but can also represent a program having a distributed configuration of a plurality of modules or libraries or represent a program that executes its functions in cooperation with a separate program such as the OS (Operating System). Regarding the specific configuration, the reading sequence, or the installing sequence upon reading the recording medium in each device according the present embodiment, it is possible to implement the know configuration or sequences.

The storage unit 106 that stores therein the various databases (from the route search information file 106a to the history information file 106e and the like) is a storage means such as a RAM or a ROM, a fixed disk device such as a hard disk, a flexible disk, or an optical disk, and stores therein various programs, tables, databases, or Web page files used for various operations or for Web site provision.

Meanwhile, the route searching apparatus 100 can also be put into practice by connecting an information processing apparatus such as a know personal computer or a workstation and by installing the software (including programs, data, and the like) in the information processing apparatus for implementing the method according to the present invention.

Moreover, the constituent elements, as a whole or in part, can be separated or integrated either functionally or physically based on various types of loads or use conditions.

### INDUSTRIAL APPLICABILITY

As described above in detail, according to the present invention, its possible to provide a route searching apparatus and a route searching method that enable participation in carbon offsetting on an individual basis while using transport modes without having to perform cumbersome operations. Hence, even if a person uses a plurality of transport modes for travel, the navigation system according to the present invention can calculate the amount of emissions of greenhouse effect gases such as carbon dioxide so that participation in carbon offsetting becomes possible even on an individual basis. Besides, by enabling a large number of carbon offsetting participants to purchase emission credits, an abundant flow of funds becomes available for the use of natural energy or the tree plantation programs thereby rejuvenating the related industries and contributing to the prevention of global warming. Therefore, the navigation system is highly useful in information devices or in the field of information processing that supports carbon offsetting or route searching or is highly useful in various fields such as the field of tree plantation.

Besides, since May 2007, the electrical power for all servers used in providing the navigation service has been switched by the present applicant(s) to the electrical power generated with natural energy sources by purchasing a green electricity certificate. Hence, the implementation of the present invention enables addressing the issue of environment conservation in a comprehensive manner.

## Claims

1. A route searching apparatus comprising a control unit and a storage unit and being communicably connected to an information processing terminal comprising an input unit and a display unit and that is possessed by a user seeking carbon offsets, wherein
the storage unit includes:
a route-search-information storage unit that stores route search information including timetable data of transport modes and road network data;
an emission-amount calculation-standard storage unit that stores a calculation standard for an amount of emissions of a greenhouse effect gas over a certain distance with respect to each of the transport modes; and
an emission-credit-quantity storage unit that stores a quantity of emission credits of the greenhouse effect gas on a user-by-user basis, and
the control unit includes:
a route creating unit that receives a route search condition input by the user via the input unit from the information processing terminal, and creates at least a single route that satisfies the received route search condition using the route search information stored in the route-search-information storage unit;
an emission amount calculating unit that calculates the amount of emissions on a route-by-route basis when at least the single route created by the route creating unit is followed using the calculation standard stored in the emission-amount calculation-standard storage unit;
an emission-credit-purchase-amount calculating unit that calculates an emission credit purchase amount required for compensating the amount of emissions calculated by the emission amount calculating unit;
a route-search-result displaying unit that sends a route search result including at least the single route created by the route creating unit, the amount of emissions calculated by the emission amount calculating unit, and the emission credit purchase amount calculated by the emission-credit-purchase-amount calculating unit to the information processing terminal for display on the display unit;
an emission amount compensating unit that compensates the amount of emissions by receiving an emission credit purchase order for the emission credit purchase amount corresponding to the route selected by the user via the input unit based on the route search result displayed by the route-search-result displaying unit from the information processing terminal, and subtracting the amount of emissions equivalent to the received emission credit purchase amount from the quantity of emission credits stored in the emission-credit-quantity storage unit; and
a compensation result displaying unit that sends a compensation result including at least the amount of emissions compensated by the emission amount compensating unit and the emission credit purchase amount corresponding to the amount of emissions to the information processing terminal for display on the display unit.

2. The route searching apparatus according to claim 1, wherein
the control unit further includes:
a billing unit that charges to the user the emission credit purchase amount calculated by the emission-credit-purchase-amount calculating unit.

3. The route searching apparatus according to claim 1 or 2, wherein
the storage unit further includes:
a history information storage unit that stores history information that includes the route search result and the compensation result in at least a partially corresponding manner on a user-by-user basis,
the route-search-result displaying unit stores at least a part of the route search result in the history information storage unit on a user-by-user basis, and
the compensation result displaying unit stores at least a part of the compensation result in the history information storage unit on a user-by-user basis.

4. route searching method executed by a route searching apparatus including a control unit and a storage unit and being communicably connected to an information processing terminal including an input unit and a display unit and that is possessed by a user seeking carbon offsets, wherein
the storage unit includes:
a route-search-information storage unit that stores route search information including timetable data of transport modes and road network data;
an emission-amount calculation-standard storage unit that stores a calculation standard for an amount of emissions of a greenhouse effect gas over a certain distance with respect to each of the transport modes; and
an emission-credit-quantity storage unit that stores a quantity of emission credits of the greenhouse effect gas own a user-by-user basis, and
the method comprising:
(i) a route creating step of receiving a route search condition input by the user via the input unit from the information processing terminal, and creating at least a single route that satisfies the received route search condition using the route search information stored in the route-search-information storage unit;
(ii) an emission amount calculating step of calculating the amount of emissions on a route-by-route basis when at least the single route created at the route creating step is followed using the calculation standard stored in the emission-amount calculation-standard storage unit;
(iii) an emission-credit-purchase-amount calculating step of calculating an emission credit purchase amount required for compensating the amount of emissions calculated at the emission amount calculating step;
(iv) a route-search-result displaying step of sending a route search result including at least the single route created at the route creating step, the amount of emissions calculated at the emission amount calculating step, and the emission credit purchase amount calculated at the emission-credit-purchase-amount calculating step to the information processing terminal for display on the display unit;
(v) an emission amount compensating step of compensating the amount of emissions by receiving an emission credit purchase order for the emission credit purchase amount corresponding to the route selected by the user via the input unit based on the route search result displayed at the route-search-result displaying step from the information processing terminal, and subtracting the amount of emissions equivalent to the received emission credit purchase amount from the quantity of emission credits stored in the emission-credit-quantity storage unit; and
(vi) a compensation result displaying step of sending a compensation result including at least the amount of emissions compensated at the emission amount compensating step and the emission credit purchased amount corresponding to the amount of emissions to the information processing terminal for display on the display unit,
wherein the steps (i) to (vi) are executed by the control unit.

5. The route searching method according to claim 4, the method further comprising:
a billing step of charging to the user the emission credit purchase amount calculated at the emission-credit-purchase-amount calculating step.

6. The route searching apparatus according to claim 4 or 5, wherein
the storage unit further includes:
a history information storage unit that stores history information that includes the route search result and the compensation result in at least a partially corresponding manner on a user-by-user basis,
at the route-search-result displaying step, at least a part of the route search result is stored in the history information storage unit on a user-by-user basis, and
at the compensation result displaying step, at least a part of the compensation result is stored in the history information storage unit on a user-by-user basis.
